# EUROPEAN PATENT SPECIFICATION

(11) **EP 0 336 180 B1**
(45) Date of publication and mention of the grant of the patent: **13.12.1995**
(21) Application number: 89104871.2
(22) Date of filing: 18.03.1989
(51) Int. Cl.: H04N 3/22

(54) **Stabilization of the television picture width**
Fernsehbildbreitenstabilisierung
Stabilisation de la largeur d'image de télévision

(30) Priority: 05.04.1988 FI 881569
(43) Date of publication of application: 11.10.1989
(73) Proprietor: NOKIA KULUTUSELEKTRONIIKKA OY, 20310 Turku (FI)
(72) Inventor: Brockman, Hans-Jürgen, SF-25130 Muurla (FI)
(74) Representative: Stracke, Alexander, Dipl.-Ing.

(56) References cited:
- US-A- 4 064 454

## Description

The present invention relates to the measuring circuit of a high voltage transformer according to the preamble of claim 1, by means of which the anode voltage of a television picture tube in particular is measured.

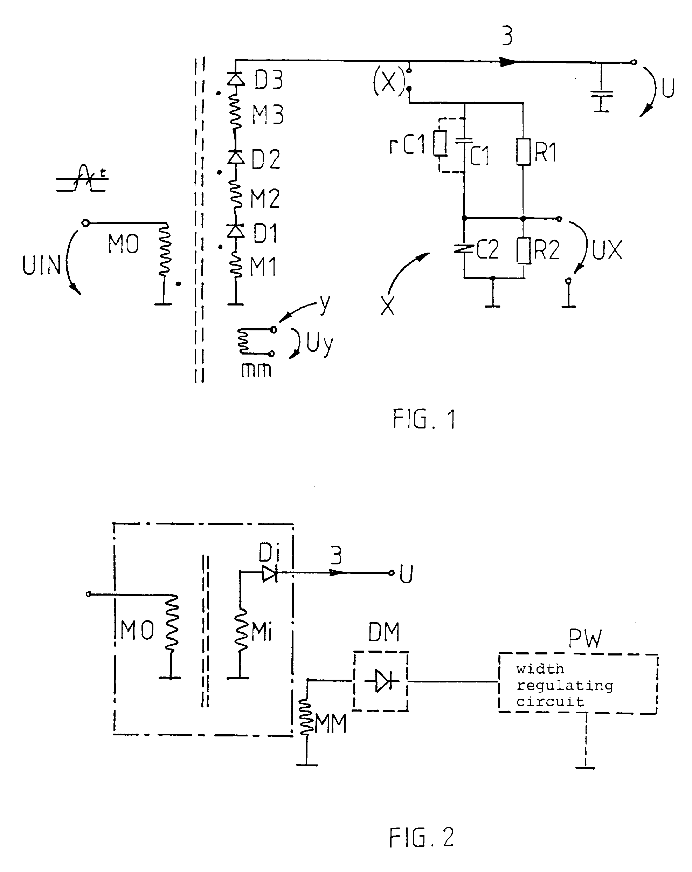

In television sets, monitors and similar tube devices, the anode voltage of the tube is preferably generated by means of a high voltage transformer, in which the secondary coil is split into partial coils separated by diodes. Figure 1 gives an example of such a high voltage circuit realized by means of diode split technique (partial coils M1-M3 and diodes D1-D3), in which the initial voltage U is e.g. 25 kV and the pulse frequency of the feed voltage UIN is 15 625 Hz and the pulse duration t is approx. 12 »s.

In most voltage sources one endeavours either to adjust the initial voltage or at least to measure it. Where the above circuit in a television or a monitor is concerned, the initial current 3 may fluctuate. As the current increases, the picture tends to grow, which is compensated by the picture width regulating circuit. Two ways of informing the regulating circuit, illustrated in figure 1, of the fluctuation of the initial voltage U are known, which, due to the internal impedance of the transformer, also illustrate the current 3 intensity.

The circuit denoted by reference x in figure 1 is connected between the initial voltage and the earth. The tap provides the measuring voltage Ux, the upper and lower time constants being equal (R1 * C1 = R2 * C2). Due to the high voltage the used components are expensive, for instance implementing C1 with a coaxial cable (having the leak resistance rC1), as well as temperature sensitive.

Another method consists of setting up the measuring circuit y by means of auxiliary coils. The auxiliary coil can be disposed at the lower end of the secondary coil, which has a lower voltage level. However, in this case, it does not illustrate correctly the starting values of the whole secondary coil, since the coil M1 dominates. In order to achieve optimal operation, the resonance frequencies of the coils M1-M3 are differently tuned so that the starting pulse of the secondary coil approaches a rectangular pulse. The auxiliary coil could be disposed at the upper end of the secondary coil, where a better measuring signal Uy would be obtained, but then again, the solutions to the protection and insulation problems caused by the high voltage raise the price of the circuit.

The purpose of the invention is to provide a measuring circuit of a high voltage transformer, in which the problems involved with prior known technique are solved, and which is simple and inexpensive to manufacture.

This purpose is achieved according to the invention in that the measuring circuit is characterized by the features disclosed in the characterizing part of claim 1. The measuring coil then is disposed at a distance from the periphery of the secondary coil in the centre of the secondary coil.

A preferred embodiment of the invention consists in disposing as a coil in the measuring circuit a wire lap on the outer surface of the housing of the high voltage transformer.

The starting signal of the measuring circuit according to the invention can be used for stabilizing the width of the television picture, and more generally for adjusting high voltage.

The invention is described in greater detail below with the aid of an embodiment example relating to the adjustment of the width of the television picture, comprising a drawing in which:
figure 1 shows the circuit diagram of a high voltage transformer, also giving examples of known measuring circuits (x and y);
figure 2 shows schematically a measuring circuit according to the invention;
figure 3 shows the set-up of the measuring coil of a measuring circuit according to the invention; and
figure 4 is a perspective view of a part section of an embodiment of the invention.

Figure 1 shows a circuit diagram of the circuit that generates the anode voltage U of a television picture tube. The primary voltage UIN is formed by the horizontal line blanking pulses of the scanning line, which are guided to the primary coil MO. The voltage is raised by the diodes D1-D3 in the secondary coil which is split into three parts M1-M3 so that the initial voltage U is e.g. 25 kV. More generally, there can be a number N of partial coils and diodes, in which N≧2.

In figure 2, the basic circuit of figure 1 is illustrated in a more simplified manner. As the modification of the picture width brought about by the fluctuation of the current 3 ofthe picture tube is now to be compensated, this energizing quantity of the regulating circuit is obtained according to the invention by the measuring coils MN as a voltage pulse, which is rectified by the rectifier DM before being brought into the width regulating circuit PW.

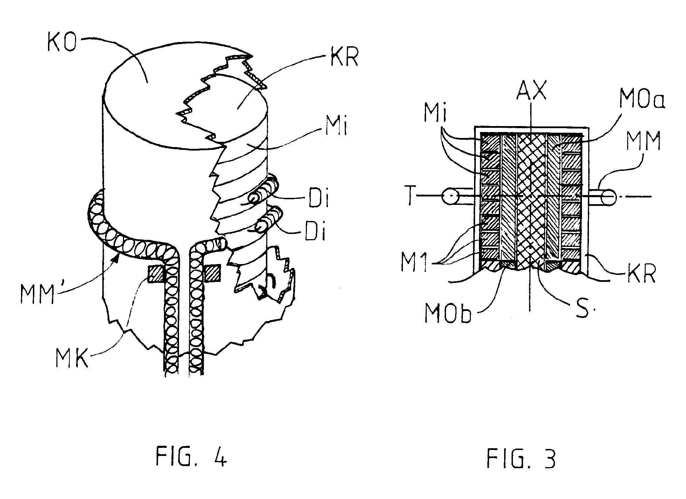

Figure 3 shows schematically a section of the positioning of the measuring coil in the transverse plane T in the centre of the axis AX of the reel frame KR of the transformer. Figure 3 also shows as an example the position of the primary coil MO on the reel frame, where two electrically parallel partial coils Moa and Mob are provided, as well as a compartment construction, which forms the reel frame and in which the partial coils Mi of the secondary coil are placed on top of each other. The transformer core S is disposed in the centre of the frame. The figure does not show in detail the other transformer frame construction to which the lower section of the figure relates. Also in this case i≧2.

Figure 4 is a perspective view of the measuring coil accomplished in a preferred case by one wire lap MM′, which is fixed to the outer surface of the transformer housing KO. The wire MM′ can be anchored e.g. by means of the lugs MK cast in the housing KO, where a snap-in contact can be provided for the wire. Figure 4 also shows the position of the diodes Di between the partial coils Mi of the secondary coil on the outer surface of the reel frame.

The diode split technique that is known per se derives from the problem of the interference field caused by the high voltage transformer. By dividing the secondary coil into compartments with the diodes, an essentially smaller interference radiation field is generated. In order to make the diodes operate close to the optimum, the resonance frequencies of the partial coils have to be differently tuned in a manner known per se, whereby their harmonic waves are totalized with the fundamental wave pulse of the secondary coil, thus enlarging it. This different tuning, however, results in that the measuring coil being physically close to one of the partial coils M1-M3 would illustrate the voltage/current of the closest coil because of the great capacitive connection. According to the present invention, the voltage/current values prevailing in the various secondary coils provide a good average integrated picture by placing the measuring winding MM so that the various partial coils affect it essentially over the same connection. The optimal positioning of the coil MM by diode split technique is in the centre of the reel outside the secondary coil.

By forming the measuring coil MM′ by means of one wire as shown in figure 4, a practicable solution is achieved, having surprisingly good properties in practice. It is simple and noticeably more advantageous to produce and test than prior known solutions. By placing the measuring coil MM′ on the outer surface of the transformer housing, it is not subject to high voltage stresses, and thus the security of use is improved. Owing to this construction the measuring circuit becomes rapid, since in practice the capacitances of the measuring coil MM and the rectifier are small enough not to have a retarding effect on the operation.

As to the rectifying circuit DM connected with the measuring coil, it can be noted that the best result is achieved by detecting the peak, since this can prevent the ringing phenomenon, which is caused by the different tuning of the partial coils M1-M3, from advancing, i.e. vibrations with a small amplitude occurring after the fundamental pulse are not taken into account.

Although the invention is being described by using an application of television technique, it is evident that the circuit solution is suitable in general in connection with high voltage transformers and in particular for regulation purposes.

An important embodiment is in monitors, in which, owing to the applications of use, a fluctuating tuning frequency is applied, whereby the dimensioning of the RC and LC circuits, for instance, is difficult. The measuring coil according to the invention is appropriate for such a use without separate tuning, provided that the circuit switching is similar to the one described above.

## Claims

1. A combination of a high voltage transformer of generally cylindrical shape and disposed in a housing (KO), and a measuring circuit by means of which the high voltage (U) operating over the secondary coil of the transformer as split into a number n of coils separated by diodes (D1-Dn), is measured, in particular the anode voltage of a television picture tube or a similar tube, **characterized** in that the measuring circuit is formed by a measuring coil (MM), which is disposed outside the housing (KO) of the high voltage transformer, coaxially with the transformer at a distance from the coils (M1-Mn) of the secondary coil of the transformer in or in the immediate vicinity of a plane (T) perpendicular to the longitudinal axis (AX) of the secondary coil and at the midpoint of said axis.

2. A combination according to claim 1, **characterized** in that the measuring coil comprises only one lap (MM′).

3. A combination according to claim 1 and 2, **characterized** in that the wire lap (MM′) forming the coil is wound and fixed (MK) to the surface of the transformer housing (KO).

4. A picture width measuring circuit incorporating the combination according to any of the previous claims, by means of which the anode voltage of a television picture tube or a similar tube is measured, **characterized** in that the picture width stabilizing circuit (PW) is conrolled with the measured signal.

## Patentansprüche

1. Kombination eines im wesentlichen zylindrischen, in einem Gehäuse (40) angeordneten Hochspannungstransformators mit einer Meßschaltung, durch die die an der Sekundärspule des Transformators anliegende Hochspannung (U) gemessen wird, die in n Spulen unterteilt ist, die über Dioden (D1-Dn) voneinander getrennt sind, insbesondere zum Messen der Anodenspannung einer Fernsehröhre oder dergl.,
**dadurch gekennzeichnet**,
daß die Meßschaltung von einer Meßspule (MM) gebildet wird, die an der Außenseite des Gehäuses (KO) des Hochspannungstransformators vorgesehen ist, und zwar koaxial zum Transformator und beabstandet von den Spulen (M1-Mn) der Sekundärspule des Transformators und zwar in bzw. in unmittelbarer Nachbarschaft einer Ebene (T), die sich senkrecht zur Längsachse (AX) der Sekundärspule und mittig dazu erstreckt.

2. Kombination nach Anspruch 1,
**dadurch gekennzeichnet**,
daß die Meßspule lediglich eine Wicklung (MM′) aufweist.

3. Kombination nach Anspruch 1 und 2,
**dadurch gekennzeichnet**,
daß die drahtförmige Wicklung (MM′), die die Meßspule ausbildet, um das Gehäuse (KO) des Transformators gewikkelt und an dessen Oberfläche befestigt ist (Befestigung MK).

4. Schaltung zum Messen der Bildbreite mit Hilfe der Kombination nach einem der vorhergehenden Patentansprüche, durch die die Anodenspannung einer Fernsehröhre oder dergl. gemessen wird,
**dadurch gekennzeichnet**,
daß die Schaltung (PW) zum Stabilisieren der Bildbreite vom gemessenen Signal gesteuert wird.

## Revendications

1. Combinaison d'un transformateur à haute tension, de forme généralement cylindrique et placé dans un carter (KO), et d'un circuit de mesure au moyen duquel la haute tension (U), présente dans la bobine secondaire du transformateur , divisée en un certain nombre n de bobines séparées par des diodes (D1-Dn), est mesurée, en particulier, la tension d'anode d'un tube-image de télévision ou d'un tube similaire, caractérisé en ce que le circuit de mesure est constitué d'une bobine de mesure (MM) qui est placée à l'extérieur du carter (KO) du transformateur à haute tension, de manière coaxiale par rapport au transformateur, à une certaine distance des bobines (M1-Mn) de la bobine secondaire du transformateur, dans, ou à proximité immédiate d'un plan (T) perpendiculaire à l'axe longitudinal (AX) de la bobine secondaire et au niveau du point médian dudit axe.

2. Combinaison selon la revendication 1, caractérisée en ce que la bobine de mesure ne comprend qu'un seul tour (MM′).

3. Combinaison selon la revendication 1 et la revendication 2, caractérisée en ce que le tour (MM′) formant la bobine est enroulé et fixé (MK) à la surface du carter du transformateur (KO).

4. Circuit de mesure de la largeur d'image comprenant la combinaison selon l'une quelconque des revendications précédentes, au moyen duquel la tension d'anode d'un tube-image de télévision ou d'un tube similaire est mesurée, caractérisé en ce que le circuit de stabilisation de la largeur d'image (PW) est contrôlé par le signal mesuré.
